# EUROPÄISCHE PATENTSCHRIFT

(11) **EP 0 591 295 B1**
(45) Veröffentlichungstag und Bekanntmachung des Hinweises auf die Patenterteilung: **23.08.1995**
(21) Anmeldenummer: 92912714.0
(22) Anmeldetag: 16.06.1992
(51) Int. Cl.: G06K 19/077

(54) **IN DIE DISKETTENSTATION EINER EDV-EINRICHTUNG EINSTECKBARES ELEMENT MIT AUSWECHSELBARER PROZESSOR-/SPEICHER-KARTE**
COMPONENT WITH INTERCHANGEABLE PROCESSOR/STORAGE BOARD INSERTABLE IN THE DISKETTE STATION OF AN EDP INSTALLATION
ELEMENT A CARTE PROCESSEUR/MEMOIRE INTERCHANGEABLE INSERABLE DANS LA STATION D'ENTRAINEMENT DE DISQUETTES D'UN SYSTEME INFORMATIQUE

(30) Priorität: 26.06.1991 DE 4121023
(43) Veröffentlichungstag der Anmeldung: 13.04.1994
(73) Patentinhaber: SMARTDISKETTE GmbH, D-65510 Idstein (DE)
(72) Erfinder: BURKART, Axel, E., D-8919 Utting (DE)
(74) Vertreter: Leineweber, Jürgen, Dipl.-Phys.
(86) Internationale Anmeldenummer: EP9201356
(87) Internationale Veröffentlichungsnummer: WO9300658

(56) Entgegenhaltungen:
- EP-A- 0 328 124
- DE-A- 3 534 638
- DE-A- 3 903 454

## Beschreibung

Die Erfindung bezieht sich auf ein in eine EDV-Einrichtung einsteckbares Element mit den Merkmalen des Oberbegriffs des Patentanspruchs 1.

Aus der DE-A-37 01 114 ist ein Element mit diesen Merkmalen bekannt. Diese betrifft eine IC-Karte mit einer Fassung. Die Karte selbst ist mit elektronischen Schaltkreisen und der zugehörigen Stromversorgung ausgerüstet. Sie hat damit eine beschränkte Speicher- und Prozessorkapazität, zumal auch die notwendige Batterie Bestandteil der Karte sein muß. Die Fassung dient nur der funktionssicheren Verbindung der Anschlüsse an der Karte mit einer äußeren Einrichtung. Dazu sind Kontaktstifte vorgesehen, die den Anschlüssen an der Karte anliegen, die Fassung durchsetzen und mit ihren anderen Enden aus der Fassung herausragen. Der Einsatz dieser Karte mit Fassung erfordert deshlab eine gesonderte Schnittstelle, die den Kontaktstiften der Fassung angepaßt sein muß, damit der Prozessor beispielsweise mit einem Zentralrechner kommunizieren kann.

Zum Stand der Technik gehört außerdem noch der Inhalt der EP-A-328 124. Dieses Dokument offenbart eine Karte mit internationaler Normung der Außenabmessungen von der Größe einer Scheckkarte. Diese Karte ist mit einer Aussparung ausgerüstet, in der eine Minichipkarte lösbar befestigt ist.

Der vorliegenden Erfindung liegt die Aufgabe zugrunde, ein kombiniertes Element der gattungsgemäßen Art derart zu gestalten, daß es zur Vervielfachung seiner Anwendungsmöglichkeiten mit einer vergrößerten Speicher- und Prozessorkapazität ausgerüstet werden kann und daß ein Zentralrechner über ein vorhandenes Schreib-/Lesegerät mit dem Prozessor der Chipkarte kommunizieren kann.

Erfindungsgemäß wird diese Aufgabe durch die kennzeichnenden Merkmale des Patentanspruchs 1 gelöst.

Dadurch, daß der Rahmen bzw. das kombinierte Element als Ganzes die äußere Form einer Diskette hat und mit einer Schnittstelle ausgerüstet ist, die mit dem Schreib-/Lesekopf einer Diskettenstation kommunizieren kann, ist eine besondere, dem Rahmen angepaßte Schnittstelle für die Kommunikation des Prozessors der Chipkarte mit einem Zentralrechner nicht mehr erforderlich. Die Unterbringung von elektronischen und/ oder Versorgungsbauteilen im Rahmen ermöglicht es, die Speicher- und Prozessorkapazität der Chipkarte selbst beträchtlich zu erweitern.

Aus der DE-A-39 03 454 ist zwar eine Diskette mit einer Schnittstelle (Magnetschnittstelle) bekannt, die mit dem Schreib-/Lesekopf einer Diskettenstation kommunizieren kann. Die Ausbildung eines Teiles dieser Schnittstelle, der Wandler, ist in der DE-A-40 36 336 offenbart. Hinweise auf eine Erweiterung der Speicher- und Prozessorkapazität eines kombinierten Elementes der gattungsgemäßen Art (Chipkarte mit Fassung) sind diesen Schriften jedoch nicht entnehmbar.

Weitere Vorteile der Maßnahmen nach der Erfindung liegen darin, daß die Ausmaße der zweiten Komponente kleiner sind als die Ausmaße einer Diskette. Die zweite Komponente hat die Ausmaße einer Mini-Chipkarte, einer Chipkarte (0,8mm oder 2 mm dick) oder einer Karte mit den Ausmaßen 55 mm x 60 mm x 3 mm. Diese Karten können bequem im Geldbeutel oder der Brieftasche getragen werden. Damit werden die Vorteile des Elements, das aus der deutschen Patentanmeldung P 39 03 454 A1 bekannt ist, mit den Vorteilen einer Chipkarte kombiniert. Die Nachteile einer Chipkarte wie beschränkte Speicher- und Prozessorkapazität und daß eine spezielle Schreib-/Leseeinrichtung benötigt wird, werden durch diese Erfindung beseitigt. Die Funktion der Smart-Diskette, wie sie aus der deutschen Patentanmeldung P 39 03 454 A1 bekannt ist, lassen sich auch mit dieser Erfindung durchführen.

Eine weitere Funktion wird hier beispielhaft beschrieben. Dabei handelt es sich um die Patientendatenkarte wie sie aus der deutschen Offenlegungsschritt DE-A-35 34 638 A1 bekannt ist. Die Patientendatenkarte in der beschriebenen Ausprägung als herkömmliche Diskette hat den Nachteil, daß die personenbezogenen Daten des Patienten jederzeit lesbar sind, da sie auf einer herkömmlichen Diskette unverschlüsselt abgespeichert sind. Ein weiterer Nachteil liegt in den Ausmaßen einer Diskette. Sie kann nicht wie eine Chipkarte im Geldbeutel oder in der Brieftasche bei sich getragen werden.

Wie aus der genannten Offenlegungsschrift auch bekannt ist, können die Patientendaten auf einer Magnetstreifenkarte oder einer Chipkarte abgespeichert werden. Die Magnetstreifenkarte hat den Vorteil der kleinen Ausmaße, jedoch die gleichen Nachteile wie einfaches Auslesen der geheimen Daten wie bei einer herkömmliche Diskette. Die Chipkarte hat diesen Nachteil nicht. In ihr können die geheimen Daten sicher gespeichert werden. Sie werden erst auslesbar, wenn vorher der richtige Geheimcode eingegeben wurde. Die Nachteile einer Chipkarte sind darin zu sehen, daß nicht genügend Patientendaten darauf gespeichert werden können und daß spezielle Schreib-/Lesegeräte erforderlich sind.

Mit dieser Erfindung werden die genannten Nachteile gänzlich beseitigt. Als Schnittstelle zum Lesen und Schreiben der Patientendaten dient das Diskettenlaufwerk eines beliebigen Personal Computers und die im Element befindliche Magnetschnittstelle. Abhängig von der Ausprägung der in den Rahmen einsteckbaren Karte können dort mehrere Megabytes gespeichert werden. Durch den ebenfalls darin befindlichen Prozessor wird das Auslesen und Einschreiben von Daten nur dann erlaubt, wenn zuvor ein geheimer Zugriffscode eingegeben wurde und dieser vom Prozessor als richtig erkannt wurde.

Vorteile, Einzelheiten und Anwendungsmöglichkeiten dieser Erfindung sollen anhand von in den Figuren schematisch dargestellten Ausführungsbeispielen erläutert werden.

Es zeigen:

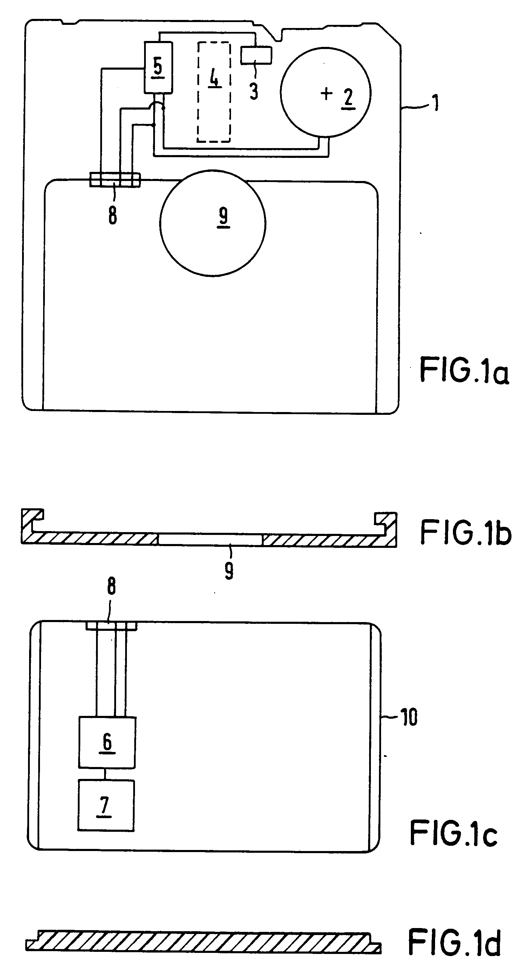

- Fig. 1 a: Einen Rahmen 1 mit Batterie 2, Wandler 3, Magnetschnittstelle 4, Kontroller 5 für Magnetschnittstelle und Steckkontakte 8 als Daten- und Stromschnittstelle zur Prozessor-/Speicherkarte 10 sowie einer Aussparung 9, wo sich üblicherweise der Antrieb für eine Magnetscheibe befindet.
- Fig. 1 b: Querschnitt der Fig. 1 a mit seitlichen Führungsschienen und einer Aussparung 9, wo sich üblicherweise der Antrieb für eine Magnetscheibe befindet.
- Fig. 1 c: Prozessor-/Speicherkarte 10 mit den äußeren Maßen einer Chipkarte, jedoch 2 mm dick, mit Prozessor 6, Speicher 7 und Steckkontakten 8 als Daten- und Stromschnittstelle zum Rahmen der SmartDiskette.
- Fig. 1 d: Querschnitt der Fig. 1 c mit abgeflachten Randseiten, um die Prozessor-/Speicherkarte 10 in die Führungsschienen des Rahmens 1 der SmartDiskette einzuschieben.
- Fig. 2 a: Rahmen 11 einer SmartDiskette mit Batterie 2, Wandler 3, Magnetschnittstelle 4, Kontroller 5 für Magnetschnittstelle und Steckkontakte 8 als Daten- und Stromschnittstelle zur Prozessor-/Speicherkarte 12.

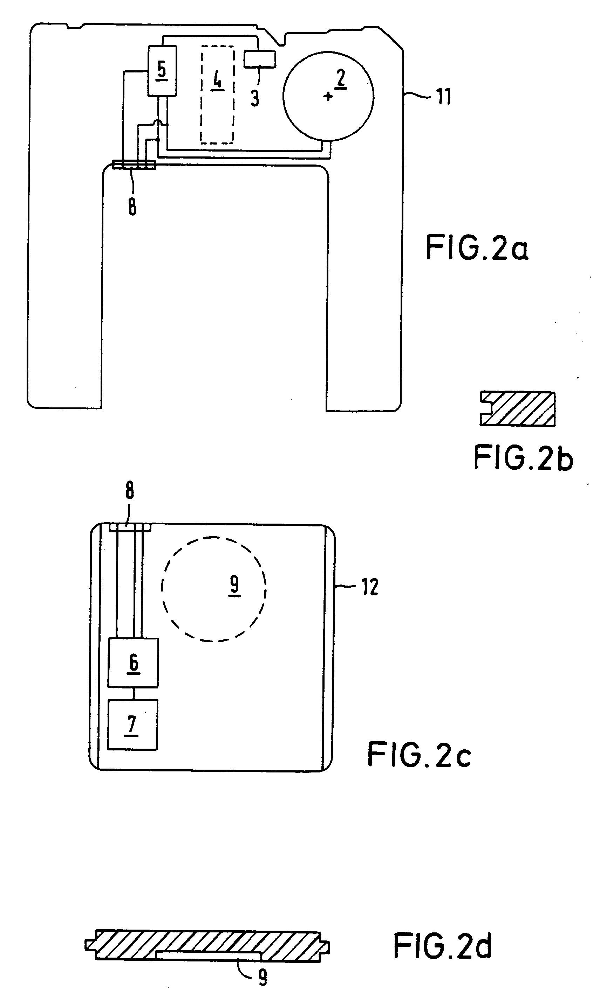

- Fig. 2 b: Querschnitt der Fig. 2 a mit seitlichen Führungsschienen.
- Fig. 2 c: Prozessor-/Speicherkarte 12 mit den äußeren Maßen 60 mm x 55 mm x 3 mm mit Prozessor 6, Speicher 7 und Steckkontakten 8 als Daten- und Stromschnittstelle zum Rahmen 11 der SmartDiskette sowie einer Aussparung 9, wo sich üblicherweise der Antrieb für eine Magnetscheibe befindet.
- Fig. 2 d: Querschnitt der Fig. 2 c mit entsprechenden Randseiten, um die Prozessor-/Speicherkarte 12 in die Führungsschienen des Rahmens 11 der SmartDiskette einzuschieben sowie einer Aussparung 9, wo sich üblicherweise der Antrieb für eine Magnetscheibe befindet.

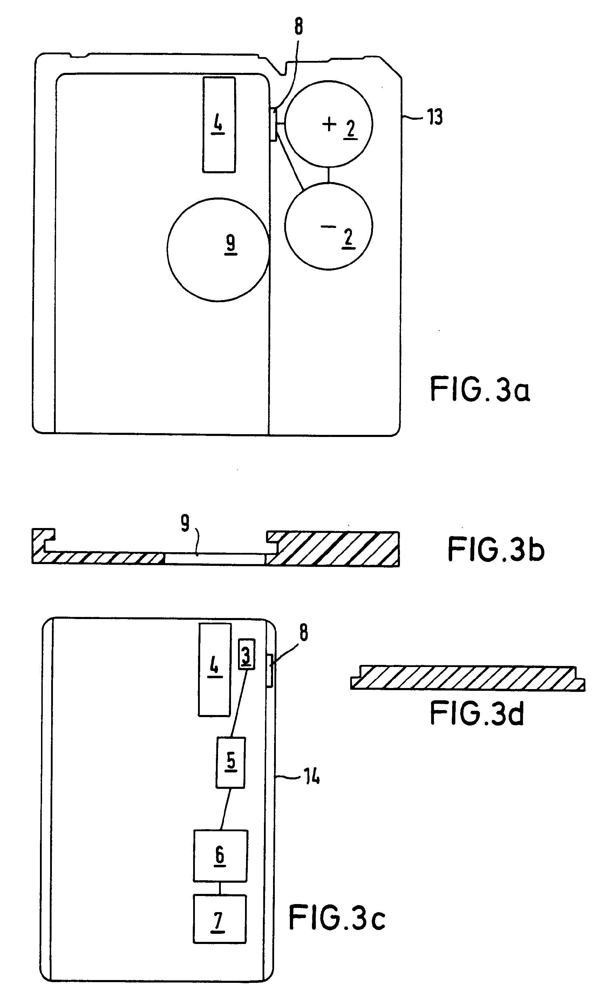

- Fig. 3 a: Den Rahmen 13 einer SmartDiskette mit Batterie(n) 2 und Kontakten 8 als Stromschnittstelle zur Prozessor- / Speicherkarte 14 (Fig. 3c) sowie einer Aussparung 9, wo sich üblicherweise der Antrieb für eine Magnetscheibe befindet.
- Fig. 3 b: Querschnitt der Fig. 3 a mit seitlichen Führungsschienen.
- Fig. 3 c: Prozessor-/Speicherkarte 14 mit den äußeren Maßen einer Chipkarte, jedoch 2 mm dick, mit Prozessor 6, Speicher 7, Steckkontakten 8 als Daten- und Stromschnittstelle zum Rahmen 13 der SmartDiskette sowie Wandler 3 und Kontroller 5 für die Magnetschnittstelle 4
- Fig. 3 d: Querschnitt der Fig. 3 c mit entsprechenden Raniseiten, um die Prozessor-/Speicherkarte 14 in die Führungsschienen des Rahmens 13 der SmartDiskette einzuchieben.

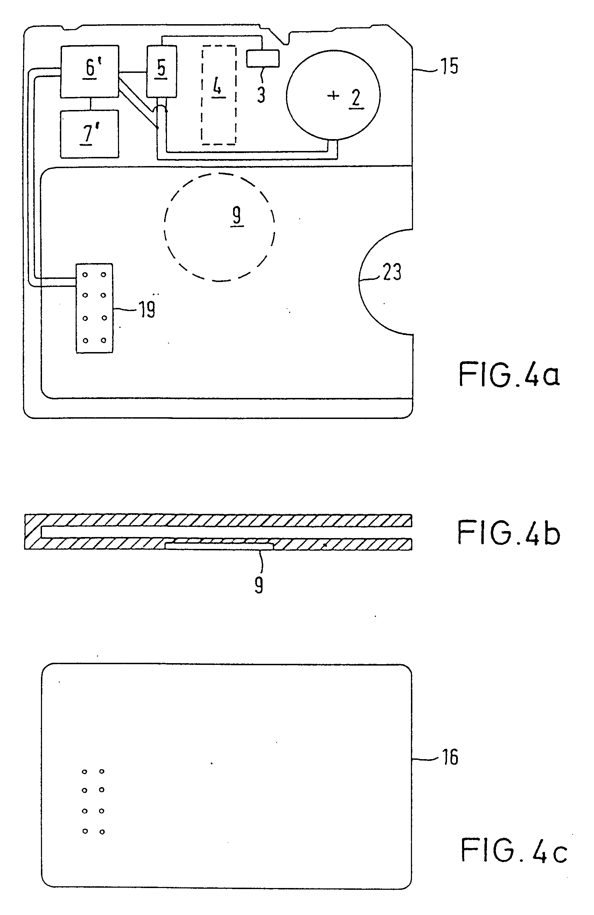

- Fig. 4 a: Den Rahmen 15 einer SmartDiskette mit Batterie 2, Wandler 3, Magnetschnittstelle 4, Kontroller 5 für die Magnetschnittstelle, Prozessor 6′, Speicher 7′ und Kontaktiereinrichtung 19 für die Chipkarte 16 (Fig.4 c) sowie Griffmulde 23 zum Herausziehen der Chipkarte 16 und einer Aussparung 9, wo sich üblicherweise der Antrieb für eine Magnetscheibe befindet.
- Fig. 4 b: Querschnitt der Fig. 4 a mit einer Aussparung zum Einführen einer Chipkarte 16 und einer weiteren Aussparung 9, wo sich üblicherweise der Antrieb für eine Magnetscheibe befindet.
- Fig. 4 c: Herkömmliche Chipkarte 16 mit herkömmlichen Kontakten, Prozessor und Speicher (nicht dargestellt).

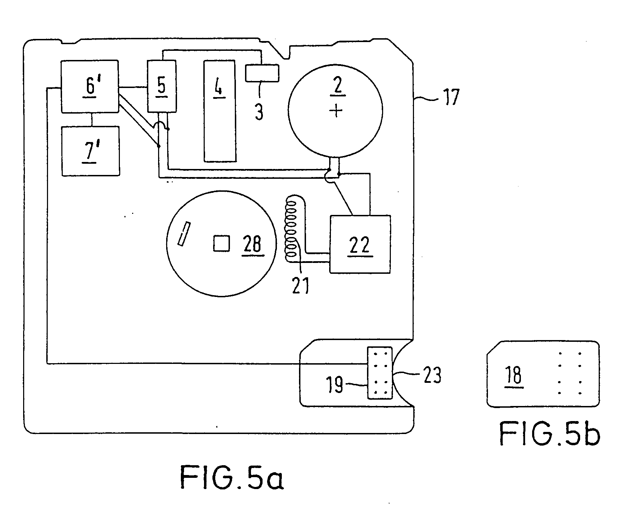

- Fig. 5 a: Den Rahmen 17 einer SmartDiskette mit Batterie 2, Wandler 3, Magnetschnittstelle 4, Kontroller 5 für die Magnetschnittstelle, Stromganerator bestehend aus Rotor 28, Stator 21, Stromregulator 22, Kontaktiereinrichtugn 19 für die Mini-Chipkarte 18 sowie Griffmulde 23 zum Herausziehen der Mini-Chipkarte 18.
- Fig. 5 b: Herkömmliche Mini-Chipkarte 18 mit herkömmlichen Kontakten, Prozessor und Speicher (nicht dargestellt).

Die in den Figuren 1 a und 1 b dargestellte SmartDiskette 1 enthält eine Aussparung von 2 Millimetern, um eine Prozessor-/ Speicherkarte 10 aufnehmen zu können sowie Steckkontakte 8, um die Prozessor-/Speicherkarte 10 mit Strom von der Batterie 2 zu versorgen und eine Datenverbindung vom Prozessor 6 der Karte 10 zur Magnetschnittstelle 4 des Rahmens der SmartDiskette herzustellen.Ferner enthält der Rahmen 1 der SmartDiskette auf der Unterseite eine Aussparung 9, wo sich üblicherweise der Antrieb für eine Magnetscheibe befindet.Die in den Figuren 1 c und 1 d dargestellte, 2 Millimeter dicke Prozessor-/Speicherkarte 10 enthält neben dem Prozessor 6 einen Datenspeicher 7 sowie Steckkontakte 8, um von der Batterie 2 im Rahmen 1 der SmartDiskette mit Strom versorgt zu werden und eine Datenverbindung vom Prozessor 6 zu der Magnetschnittstelle 4 der SmartDiskette 1 herzustellen. Die Breitseiten sind auf 1 Millimeter verjüngt, damit die Karte 10 in die Aussparung der SmartDiskette 1 eingesteckt werden kann.

Bei dem in den Figuren 2 a und 2 b dargestellten Rahmen 11 der SmartDiskette ist ein Ausschnitt mit einer 1 Millimeter starken Nut angebracht, um eine 3 Millimeter dicke Prozessor-/Speicherkarte 12 mit angepaßten Rändern aufzunehmen, sowie Steckkontakte 8, um die Prozessor-/Speicherkarte 12 mit Strom von der Batterie 2 zu versorgen und eine Datenverbindung vom Prozessor 6 der Karte 12 zur Magnetschnittstelle 4 der SmartDiskette herzustellen. Die in den Figuren 2 c und 2 d dargestellte 3 Millimeter dicke Prozessor /Speicherkarte 12 enthält neben dem Prozessor 6 einen Datenspeicher 7 sowie Steckkontakte 8, um von der Batterie 2 der SmartDiskette mit Strom versorgt zu werden und eine Datenverbindung vom Prozessor 6 zu der Magnetschnittstelle 5 der SamrtDiskette 1 herzustellen. Die Längsseiten weisen eine 1 Millimeter dicke Feder auf, um die Karte 12 in den Ausschnitt und die Nut des Rahmens 11 einstecken zu können. Ferner enthält die Karte 12 auf der Unterseite eine Aussparung 9, wo sich üblicherweise der Antrieb für eine Magnetscheibe befindet.

Der in den Figuren 3 a und 3 b dargestelltte Rahmen 13 der SmartDiskette enthält eine Aussparung von 2 Millimetern, um eine prozessor-/Speicherkarte 14 mit integrierter Magnetschnittstelle 4 aufzunehmen, sowie Steckkontakte 8, um die Karte 14 mit Strom von der Batterie 2 zu versorgen. Ferner enthält der Rahmen 13 der SmartDiskette auf der Unterseite eine Aussparung 9, wo sich üblicherweise der Antrieb für eine Magnetscheibe befindet. Die in den Figuren 3 c und 3 d dargestellte 2 Millimeter dicke Prozessor-/Speicherkarte 14 enthält neben dem Prozessor 6 einen Datenspeicher 7, Wandler 3 und Kontroller 5 für die Magnetschnittstelle 4 sowie Steckkontakte 8, um von der Batterie 2 des Rahmens 13 der SmartDiskette mit Strom versorgt zu werden. Die Längsseiten sind auf 1 Millimeter verjüngt, damit die Karte 14 in die Aussparung des Rahmens 13 eingesteckt werden kann.

Der in den Figuren 4 a und 4 b dargestellte Rahmen 15 der SmartDiskette enthält eine Aussparung von 2 Millimetern, in die eine Chipkarte 16 von der Seite her eingesteckt werden kann, sowie eine Kontaktiereinrichtung 19, um die Chipkarte 16 mit Strom von der Batterie 2 zu versorgen und eine Datenverbindung vom Prozessor der Chipkarte 16 zum Prozessor 6′ des Rahmens 15 der SmartDiskette herzustellen. Ferner enthält die SmartDiskette auf der Unterseite eine Aussparung 9, wo sich üblicherweise der Antrieb für eine Magnetscheibe befindet. Am rechten Rand des Rahmens 15 der SmartDiskette befindet sich eine Griffmulde 23, um die Chipkarte 16 herausziehen zu können. Bei der in der Figur 4 c dargestellten Chipkarte 16 handelt es sich um eine übliche 0,8 Millimeter dicke Chipkarte mit Prozessor und einem Datenspeicher sowie Kontakten, um von der Batterie 2 der SmartDiskette mit Strom versorgt zu werden und eine Datenverbindung vom Prozessor der Chipkarte zum Prozessor 6′ der SmartDiskette herzustellen.

Der in der Figur 5 a dargestellte Rahmen 17 enthält eine Aussparung von 1 Millimeter, in die eine Mini-Chipkarte 18 von der Seite eingesteckt werden kann, sowie eine Kontaktiereinrichtung 19 um die Mini-Chipkarte 18 mit Strom von der Batterie 2 zu versorgen und eine Datenverbindung vom Prozessor der Mini-Chipkarte 18 zum Prozessor 6′ der SmartDiskette herzustellen. Ferner enthält der Rahmen 17 der SmartDiskette auf der Unterseite eine Aussparung 9, wo sich üblicherweise der Antrieb für eine Magnetscheibe befindet. Am rechten Rand des Rahmens 17 der SmartDiskette befindet sich eine Griffmulde 23, um die Mini-Chipkarte 18 herausziehen zu können. Bei der in der Figur 5 b dargestellten Mini-Chipkarte handelt es sich um eine übliche 0,8 Millimeter dicke Mini-Chipkarte mit Prozessor und einem Datenspeicher sowie Kontakten, um von der Batterie 2 der SmartDiskette mit Strom versorgt zu werden und eine Datenverbindung vom Prozessor der Mini-Chipkarte zum Prozessor 6′ der SmartDiskette herzustellen.

Aus der folgenden Auflistung geht die Vielzahl der Anwendungsmöglichkeiten einer nach der Erfindung gestalteten SmartDiskette mit einsteckbarer Prozessor-/Speicherkarte mit den damit verbundenen Vorteilen hervor:

### Anwendungsmöglichkeiten:

- Schreib-/Leseeinrichtung für Chipkarten und Mini-Chipkarten
- Kommunikation einer Chipkarte und Mini-Chipkarte mit PC
- Speicherkarte mit mehreren Megabytes Speicherkapazität
- Speicherkarte mit integriertem Prozessor zur Prüfung eines Zugriffs-Codes und Freigabe des Speichers nur dann, wenn der Zugriffs-Code als richtig erkannt wurde.
- Bequem im Geldbeutel oder in der Brieftasche zu transportierender sicherer Datenträger, der, wenn er in die SmartDiskette gesteckt ist, mit jedem handelsüblichen PC kommunizieren kann.

### Vorteile:

- An jedem PC und an jeder Workstation mit 3 1/2 Zoll-Laufwerk einsetzbar.
- In Laptops und Notebooks einsetzbar.
- Unabhängig von der Leistungsfähigkeit des Betriebssystems des PC.
- Unabhängig von den verfügbaren Schnittstellen und Steckplätzen des PC.
- Keine Normierungsprobleme, normierte Schnittstellen bereits vorhanden.
- Keine Hardware-Installationskosten.
- Hoher Datendurchsatz (bis zu 500 kbit/sec)
- Platzsparend und portabel
- Hohe Speicherkapazität (mehrere Megabytes)

## Patentansprüche

1. In eine EDV-Einrichtung einsteckbares Element
- mit einer Karte (10,12,14,16,18), die mit einem Prozessor (6) und mit einem Datenspeicher (7) ausgerüstet ist (Chipkarte),
- mit einem Rahmen (1, 11, 13, 15, 17), der mit einer Aufnahme für die Karte (10,12,14,16,18) ausgerüstet ist,
- mit einer ersten Schnittstelle (4), die der Datenübertragung zwischen dem Element und der EDV-Einrichtung dient, und
- mit einer zweiten Schnittstelle (8, 19), die von Kontakten an der Karte sowie am Rahmen gebildet wird,
dadurch gekennzeichnet,
- daß der Rahmen (1,11,13,15,17) die äußere Form einer Diskette hat, so daß er in die Diskettenstation einer EDV-Einrichtung einsteckbar ist,
- daß die erste Schnittstelle (4) zwischen dem Element und der EDV-Einrichtung in an sich bekannter Weise derart ausgebildet ist, daß eine Datenübertragung über die in der Diskettenstation der EDV-Einrichtung ohnehin vorhandene Schreib-/Leseeinrichtung durchführbar ist, und
- daß sich auch im Rahmen (1,11,13,15,17) elektronische Bauteile (3,5,6′,7′) befinden, und zwar eine Batterie (2) zur Stromversorgung der auf der Karte befindlichen Bauteile (6,7) über die Schnittstelle (8,19) sowie zur Scchaffung zusätzlicher Prozessor- und Speicherkapazität ein weiterer Prozessor (6′) und Datenspeicher (7′).

2. Element nach Anspruch 1, dadurch gekennzeichnet, daß der Rahmen (1, 13, 15) und/oder die Chipkarte (12) mit einer Aussparung (9) zur Aufnahme des Antriebs der Diskettenstation ausgerüstet ist.

3. Element nach Anspruch 1 oder 2, dadurch gekennzeichnet, daß die erste Schnittstelle (4) Bestandteil der Chipkarte (14) ist.

4. Element nach Anspruch 1, 2 oder 3, dadurch gekennzeichnet, daß der Rahmen (17) mit einem Stromgenerator (21,28) ausgerüstet ist.

5. Verwendung eines Elementes nach einem der Ansprüche 1 bis 4 als Patientendatenträger.

6. Verfahren zum Zugriffsschutz bei Elementen nach einem der Ansprüche 1 bis 4, dadurch gekennzeichnet, daß der Zugriff auf den Datenspeicher (7) erst dann gestattet wird, wenn ein gültiger Zugriffs-Code eingegeben wird.

7. Verfahren zur Änderung des Zugriffs-Codes nach Anspruch 6, dadurch gekennzeichnet, daß die Änderung des Zugriffs-Codes nur dann erlaubt wird, wenn der zuvor gültige Zugriffs-Code eingegeben wurde.

## Claims

1. An element which can be plugged into an EDP device
- with a card (10, 12, 14, 16, 18), which is equipped with a processor (6) and with a data memory (7) (chip card),
- with a frame (1, 11, 13, 15, 17), which is designed to accommodate the card (10, 12, 14, 16, 18),
- with an interface (4) for the transfer of data between the element and the EDP device,
- with a second interface (8, 19), which is formed by contacts on the card and on the frame, characterized by the fact that,
- the frame (1, 11, 13, 15, 17) has the exterior form of a diskette so that it can be inserted into the diskette station of an EDP device,
- the first interface (4) between the element and the EDP device is designed in a standard fashion so that the data can be transferred using the read/write device already present in the diskette station of the EDP device,
- electronic components (3, 5, 6′, 7′) are also located in the frames: a battery (2) for supplying current via the interface (8, 19) to the components (6, 7) located on the card and an additional processor (6′) and data memory (7′) for creating additional processor and storage capacity.

2. Element according to claim 1, characterized by the fact the frames (1, 13, 15) and/or the chip card (12) is equipped with a recess (9) for accommodating the drive of the diskette station.

3. Element according to claim 1 or 2, characterized by the fact that the first interface (4) is part of the chip card (14).

4. Element according to claim 1, 2 or 3, characterized by the fact that the frame (17) is equipped with a current generator (21, 28).

5. Use of an element according to one of the claims 1 to 4 as patient data card

6. Process for access protection through elements according to one of the claims 1 to 5, characterized by the fact that access to the data memory (7) is not permitted until a valid access code has been entered.

7. Process for modifying the access code according to claim 6, characterized by the fact that the modification of the access code is only permitted if the previously valid access code has been input.

## Revendications

1. Elément enfichable dans un dispositif informatique
- avec une carte (10, 12, 14, 16, 18) équipée d'un processeur (6) et d'une mémoire de données (7) (carte à puce),
- avec un cadre (1, 11, 13, 15, 17) équipé d'un emplacement pour la carte (10, 12, 14, 16, 18),
- avec une première interface (4) qui sert au transfert des données entre l'élément et le dispositif informatique, et
- avec une seconde interface (8, 19) formée de contacts sur la carte ainsi que sur le cadre,
se caractérisant par le fait,
- que le cadre (1, 11, 13, 15, 17) a l'allure d'une disquette de façon à pouvoir être enfiché dans le poste de disquettes d'un dispositif informatique,
- que la première interface (4) entre l'élément et le dispositif informatique est conçue de façon connue en soi pour qu'un transfert des données puisse être réalisé via le poste de disquettes du dispositif informatique sans qu'il n'y ait de dispositif lecture/écriture et
- qu'il y ait des composants électroniques (3, 5, 6′, 7′) même dans le cadre (1, 11, 13, 15, 17), à savoir une pile (2) pour l'alimentation via l'interface (8, 19) des composants (6, 7) situés sur la carte ainsi qu'un processeur additionnel (6′) et une autre mémoire de données (7′) pour pouvoir augmenter la capacité du processeur et de la mémoire.

2. Elément selon revendication 1 se caractérisant par le fait que le cadre (1, 13, 15) et/ou la carte à puce (12) est équipé d'un emplacement (9) pour l'unité de commande du poste de disquettes.

3. Elément selon revendication 1 ou 2 se caractérisant par le fait que la première interface (4) est une composante de la carte à puce (14).

4. Elément selon revendication 1, 2 ou 3 se caractérisant par le fait que le cadre (17) est équipé d'un générateur de courant (21, 28).

5. Utilisation d'un élément selon l'une des revendications 1 à 4 comme support de données des patients.

6. Mode de protection de l'accessibilité pour les éléments conformes aux revendications 1 à 4 se caractérisant par le fait que l'accès à la mémoire de données (7) n'est autorisé qu'après l'entrée du code d'accès en vigueur.

7. Processus de changement du code d'accès selon la revendication 6 se caractérisant par le fait que le changement du code d'accès n'est autorisé qu'après l'entrée préalable de l'ancien code d'accès en vigueur.
